# EUROPEAN PATENT APPLICATION

(11) **EP 1 944 903 A1**
(43) Date of publication of application: **16.07.2008**
(21) Application number: 07000540.0
(22) Date of filing: 11.01.2007
(51) Int. Cl.: H04L 5/02, H04L 27/26, H04Q 7/32

(54) **Apparatus and method for organising terminals of a communication network and terminal for a communication network**

(71) Applicant: Nokia Siemens Networks GmbH & Co. KG, 81541 München (DE)
(72) Inventor: Färber, Michael, 82515 Wolfratshausen (DE); Michel, Jürgen, Dr., 81737 München (DE)

(57) **Abstract**

The invention relates to an apparatus for organising terminals of a communication network, wherein the terminals are configured to transmit tones and to achieve a peak to average power ratio reduction by tone reservation. The apparatus comprises means (412) for determining a set of dedicated tones, usable by the terminals to achieve the peak to average power ratio reduction and means (414) for transmitting allocation information to the terminals, wherein the allocation information is usable by the terminals to reserve the set of dedicated tones for the peak to average power ratio reduction.

## Description

The invention relates to an apparatus and a method for organising terminals of a communication network according to claims 1 and 12, respectively, particularly of a wireless communication network. The invention relates also to a terminal for a communication network according to claim 13.

Each communication system comprises at least one transmitter and one receiver. Peak to average power ratio (PAPR) is a measure which describes a required linearity of the transmitter to transmit signals with multi-code or multi-tone characteristic. The PAPR is also dependent on modulation schemes used for the transmission.

In order to avoid degradations in the Signal Interference Noise Ratio (SINR) required at the receiver, it is an aim to generate at the transmitter side a signal without significant distortion of the transmit signal properties. Therefore, the PAPR describes a required linearity especially of a power amplifier at the transmitter side to obtain a good link performance. The linearity of the power amplifier is achieved by introducing a back off from the power amplifier saturation point, commonly known as the 1dB compression point, about a certain amount of dB. The magnitude of this back off depends on the used modulation scheme and the multi-code or multi tone characteristic of the system concept. The back off improves the linearity of the power amplifier on the cost of higher power consumption, or a reduced maximum transmitter (TX) power.

From a mobile terminal point of view, a large power back off reduces an achievable range. If the range is maintained the power amplifier linearity causes a high power consumption shortening the battery life time significantly. This effect on increased transmitter design complexity and power demand mount up in system concepts which are utilizing balanced Multiple Input Multiple Output (MIMO) concepts e.g. 2X2 MIMO which will require the presence of two transmitters in the terminal. Due to the presence of two transmitters the effects of complex transmitter design and high battery consumption are duplicated.

Systems with Orthogonal Frequency Deviation Multiplex Access (OFDMA) multi carrier transmission are suffering on the PAPR effects in the uplink, especially if mobile terminals are being used.

It is an object of the present invention to provide an improved apparatus and an improved method for organising terminals of a communication network, and an improved terminal for a communication network.

This object is achieved by an apparatus and a method for organising terminals of a communication network with the features according to claims 1 and 12, respectively, and by a terminal for a communication network with the features according to claim 13

A basic idea of the invention is, that the network defines the tones to be used for applying an active PAPR reduction algorithm, and all terminals are using the same or a defined set of overlapping or non overlapping tones in the uplink. In other words, it is an essential aspect of the invention to organise the tone reservation by the network, and to dedicate all terminals with this capability to use the same set of reserved tones. PAPR reduction by tone reservation may be performed by any suitable known technique. This allows reducing individually the peaks in modulation, while the terminals are sharing the same minimum resource. It is not required that each mobile terminal selects its own choice of reserved tones for PAPR reduction, as this would result in a number of lost tones being multiplied with the number of mobiles in a cell, beside the case the terminals would make by chance the same choice. The characteristic features according to the present invention provide the advantage that a PAPR reduction is achievable without increasing the complexity of transmitter designs and without increasing the power consumption.

According to an embodiment of the invention, an apparatus for organising terminals of a communication network is provided, wherein the terminals are configured to transmit tones and to achieve a peak to average power ratio reduction by tone reservation, comprising:
- means for determining a set of dedicated tones, usable by the terminals to achieve the peak to average power ratio reduction, and
- means for transmitting an allocation information to the terminals, wherein the allocation information is usable by the terminals to reserve the set of dedicated tones for the peak to average power ratio reduction.

According to embodiments of the invention, the means for transmitting may be configured to transmit the allocation information based on explicit signalling, and/or may be configured to transmit the allocation information implicitly by using terminal identifications or connection frame numbers.

According to a further embodiment of the invention, the means for determining may be configured to determine a further set of dedicated tones. The means for transmitting may be configured to transmit, a predefined time after transmitting the allocation information, a further allocation information to the terminals. The further allocation information may be usable by the terminals to reserve the further set of dedicated tones for the peak to average power ratio reduction.

According to a further embodiment of the invention, the means for determining may be configured to determine a first set of dedicated tones and a second set of dedicated tones. The means for transmitting may be configured to transmit a first allocation information to a first terminal, wherein the first allocation information is usable by the first terminal to reserve the first set of dedicated tones for the peak to average power ratio reduction and to transmit a second allocation information to a second terminal, wherein the second allocation information is usable by the second terminal to reserve the second set of dedicated tones for the peak to average power ratio reduction.

The first and second set of dedicated tones may have according to an embodiment of the invention dedicated tones in common. For example, the first and second set of dedicated tones may have at least one dedicated tone or at least half of their dedicated tones in common. This allows minimizing the spectrum spoiled by the reserved dedicated tones while keeping other cell interferences on the reserved tones low.

According to a further embodiment of the invention, the apparatus may comprise means for recognising terminals being configured to achieve a peak to average power ratio reduction by tone reservation. The means for transmitting may be configured to transmit the allocation information to the terminals being configured to achieve a peak to average power ratio reduction by tone reservation. This is in particular advantageous in communication networks comprising terminals being configured to achieve a peak to average power ratio reduction by tone reservation and terminals being not configured to achieve a peak to average power ratio reduction by tone reservation.

According to a further embodiment of the invention, the apparatus may further comprise means for suppressing tones of the set of dedicated tones received by a receiver being configured to receive tones from the terminals.

The means for suppressing may be configured to set a filter of the receiver such that the tones belonging to the set of dedicated tones are suppressed. Thus, the receiver does not need to further process the dedicated tones. This is an advantage, as the dedicated tones do not bear any usable information.

According to an embodiment of the invention, the apparatus may be arranged within a base station of the communication network.

According to a further embodiment of the invention, a method for organising terminals of a communication network is provided, wherein the terminals are configured to transmit tones and to achieve a peak to average power ratio reduction by tone reservation, comprising:
- determining a set of dedicated tones, usable by the terminals to achieve the peak to average power ratio reduction,
- transmitting an allocation information to the terminals,
wherein the allocation information is usable by the terminals to reserve the set of dedicated tones for the peak to average power ratio reduction.

A further embodiment of the invention relates to a terminal for a communication network, comprising:
- means for establishing at least one radio bearer for transmitting tones,
- means for reserving a set of dedicated tones responsive to an allocation information, wherein the allocation information defines which tones are allocated to the set of dedicated tones, and
- means for transmitting tones via the at least one radio bearer, wherein the means for transmitting is configured to reduce a peak to average power ratio by using the set of dedicated tones.

According to an embodiment of the invention, the means for reserving may be configured to receive the allocation information from the communication network.

According to a further embodiment of the invention, the means for establishing may be configured to establish two radio bearers.

The terminal may further comprise means for individually processing and modulating the dedicated tones, according to an embodiment of the invention. The dedicated tones may bear no information to be transmitted by the terminal.

According to an embodiment of the invention, the at least one radio bearer may be a SC-FDMA, an OFDM or a mixture of a SC-FDMA and an OFDM based uplink.

The terminal may be a mobile device being configured to communicate with a base station of the communication network via the at least one radio bearer, according to an embodiment of the invention.

According to a further embodiment of the invention, a method for operating a terminal for a communication network is provided, comprising:
- establishing at least one radio bearer,
- reserving a set of dedicated tones responsive to an allocation information, wherein the allocation information defines which tones are allocated to the set of dedicated tones,
- transmitting tones via the at least one radio bearer,
wherein a peak to average power ratio is reduced by using the set of dedicated tones.

A communication network may comprise at least two terminals according to embodiments of the invention, a receiver for receiving tones from the at least two terminals and an apparatus according to an embodiment of the invention.

The communication network may be a wireless communication system. The terminal may be user equipment (UE) like a mobile device and the receiver may be a base station of the communication system. The apparatus according to embodiments of the invention may be arranged within the receiver.

These and other aspects of the invention will be apparent from and elucidated with reference to the embodiment(s) described hereinafter.

The invention will be described in more detail hereinafter with reference to exemplary embodiments. However, the invention is not limited to these exemplary embodiments.
- FIG 1: shows means for generating a SC-FDMA signal;
- FIG 2: shows further means for generating a SC-FDMA signal;
- FIG 3: shows a block diagram of a communication network according to the invention;
- FIG 4: shows a block diagram of an apparatus according to the invention; and
- FIG 5: shows a block diagram of a terminal according to the invention.

In the following, functional similar or identical elements may be denoted with the same reference numerals.

Single Carrier - Frequency Division Muliplex Access Systems (SC-FDMA Systems) have a low PAPR as long as all data can be mapped to one radio bearer. If the presence of more than one radio bearer is necessary the PAPR is becoming high. This effect is similar in multi-code and multi-carrier systems.

To avoid this effect due to multi carrier transmission, the system choice in third Generation Physical Plane (3GPP) Long Term Evolution (LTE) is a SC-FDMA concept for the uplink which has a low PAPR and therefore needs no strong power amplifier back off. The SC-FDMA concept may be designed in such a manner that the spectrum can be in block style, representing a conventional single carrier spectrum. However the single carrier can also be distributed to a multitude of sub carriers which are equally distributed over a band.

However, compared to the OFDM concept, the distributed SC-FDMA does not increase the PAPR. By introducing a Discrete Fourier Transformation (DFT) and an inverse Fast Fourier Transformation (iFFT) in the signal processing chain it is achieved that the PAPR is not increased. The two steps allow a signal generation in the frequency domain representing a mapping of symbols to subcarriers, which are in the next step transformed to the time domain again.

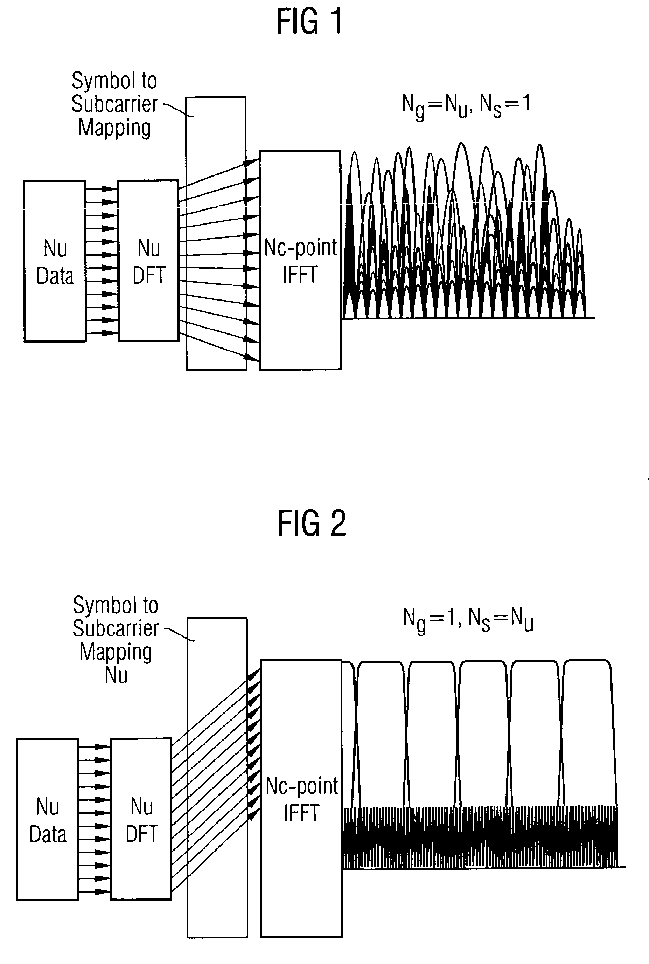

FIG 1 illustrates a DFT based generation of a SC-FDMA signal in a localized mode and FIG 2 illustrates a DFT based generation of a SC-FDMA signal in a distributed mode. In the Figures, Nc represents the number of sub-carriers over the bandwidth, Nu represents the number of data symbols per user, Ng represents the number of sub-carrier groups per user and Ns represents the number of sub-carriers per group. By means of the mapping rule, a distributed or blocked/localised SC-FDMA can be generated. For the distributed mode Ng = Nᵤ and Nₛ = 1. For the localised mode Ng = 1 and Nₛ = Nᵤ.

The low PAPR can be maintained as long all data streams are multiplexed in a single data stream. From a modulation point of view this corresponds to one data stream resulting in one spectrum. To maintain this property a corresponding Medium Access Control (MAC) layer needs to provide a high dynamic performance. For example, if signalling or quality reporting has to be sporadically inserted. In such cases a required additional amount of data has to be inserted by changes of coding or puncturing or stealing of redundancy bits. If this is not suitable, an increase of a resource block size has to be requested.

Therefore, e.g. for continuous packet connectivity (CPC) applications, it is not only necessary to report quality reports which allow a fast establishment of the radio bearer, if the CPC state is left, the additional radio bearer capacity has to be available in shortest time. Establishing a second radio bearer transmitted on a second carrier, to enable the fast allocation of the radio resource, would have the disadvantage of loosing all the PAPR advantages of SC-FDMA.

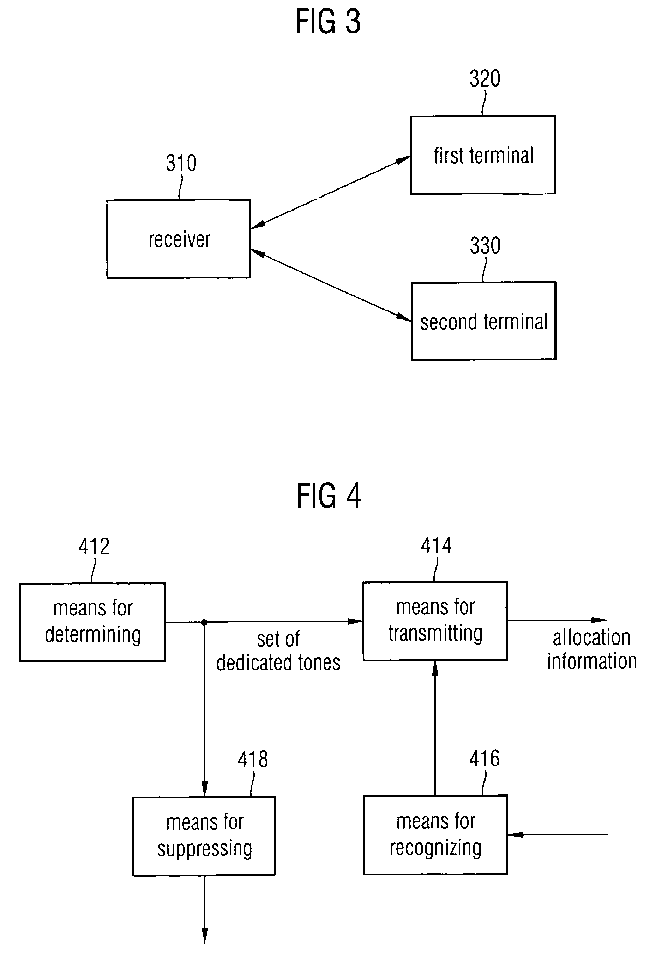

FIG 3 shows a block diagram of a communication network, according to an embodiment of the invention. The communication network comprises a receiver 310 and a plurality of terminals 320, 330. The terminals 320, 330 are configured to communicate with the receiver 310 via radio bearers transmitted on carriers.

The receiver is configured to receive tones transmitted by the terminals 320, 220 via the radio bearers. An uplink from the terminals 320, 330 to the receiver may be based on SC-FDMA, OFDM or a mixture of both concepts. The terminals 320, 330 are configured to achieve a peak to average power ratio reduction by tone reservation.

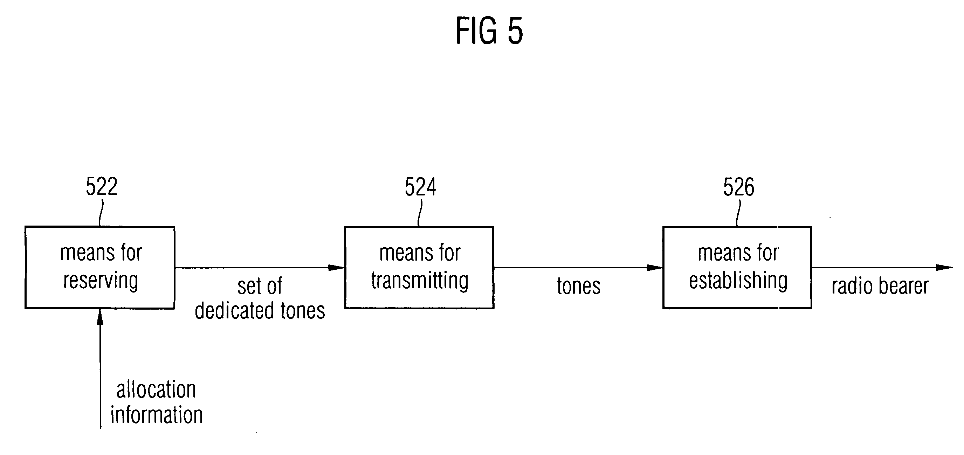

In order to organize the tones reserved by the terminals 320, 330 for PAPR reduction, the communication network further comprises an apparatus (not shown in Fig. 3) for organising the terminals 320, 330 of the communication network. The apparatus is part of the communication network and may be arranged in the receiver 310 or in any further device (not shown in the Figures) of the communication network. Pre For example, the receiver may be a base station incorporating the apparatus. The network is not limited to the devices shown in FIG 5 but may comprise a plurality of further receivers, terminals or other devices.

FIG 5 shows a block diagram of an apparatus, according to an embodiment of the invention. The apparatus is usable for organising the terminals 320, 330 of the communication network shown in FIG 3.

The apparatus comprises means 412 for determining a set of dedicated tones, usable by the terminals to achieve the peak to average power ratio reduction and means 414 for transmitting an allocation information to the terminals. The allocation information is usable by the terminals to reserve the set of dedicated tones for the peak to average power ratio reduction.

The means 412 for determining may be configured to select the set of dedicated tones from all available tones according to a predefined determination scheme. After having determined the set of dedicated tones, the means 412 for determining is configured to provide the dedicated tones to the means 414 for transmitting the allocation information. The means 414 for transmitting may be configured to transmit the allocation information based on explicit signalling. Thus, the allocation information may be a message transmitted to the terminals which comprises the dedicated tones. Alternatively, the means 414 for transmitting may be configured to transmit the allocation information implicitly by using terminal identifications or connection frame numbers.

Not all terminals of the communication network may be configured to achieve a PAPR reduction by tone reservation. In order to detect terminals being configured to achieve a PAPR reduction by tone reservation, the apparatus may further comprise means 416 for recognising these particular terminals. The means 416 for recognising may be configured to receive a message from a terminal, wherein the message indicates the configuration of the terminal in view of PAPR reduction. The means 416 for recognising may be configured to provide the means 414 for transmitting information about particular terminals of the network being configured to achieve a PAPR reduction by tone reservation. Thus, the means 414 for transmitting may be configured to transmit the allocation information to these particular terminals.

As shown in FIG 4, the apparatus may further comprise means 418 for suppressing tones of the set of dedicated tones when received by the receiver 310 shown in FIG 3. The means 412 may be configured to provide the set of dedicated tones to the means 418 for suppressing and the means 418 for suppressing may be configured to provide a suppression signal which configures the receiver to suppress received dedicated tones. The suppression may be achieved by a filter of the receiver. Thus, the means 418 for suppressing may be configured to set the filter such that the tones belonging to the set of dedicated tones are suppressed.

According to an embodiment, the means 412 for determining may be configured to determine a further set of dedicated tones. This allows the communication system to change the dedicated tones when adequate or, for example, after a predefined time interval. The means 414 for transmitting may be configured to transmit a further allocation information to the terminals after the means 412 for determining has provided the further set of dedicated tones. The further allocation information may cause the terminals to reserve the further set of dedicated tones for the peak to average power ratio reduction.

In the communication network shown in FIG 3, the first terminal 320 may use a different set of dedicated tones than the second terminal 330. Thus, the means 412 for determining may be configured to determine a first set of dedicated tones and a second set of dedicated tones. The means 414 for transmitting may be configured to transmit a first allocation information comprising the first set of dedicated tones to the first terminal and to transmit a second allocation information comprising the second set of dedicated tones to the second terminal. The means 412 for determining may be configured to select the first and second set of dedicated tones such that both sets of dedicated tones have at least one dedicated tone in common.

FIG 5 shows a terminal for a communication network according to an embodiment of the invention. The terminal may be one of the terminals 320, 330 shown in FIG 3. The terminal comprises means 522 for reserving a set of dedicated tones, means 524 for transmitting tones via a radio bearer and means 526 for establishing at least one radio bearer.

The means 522 for reserving a set of dedicated tones may be configured to receive the allocation information from the apparatus shown in FIG 4. Responsive to the allocation information the means 522 for reserving may reserve the set of dedicated tones. Thus, the dedicated tones are not used for transmitting information to the receiver. Instead, the set of dedicated tones is used to reduce the PAPR of transmissions from the terminal to the receiver. The means 522 for reserving is configured to provide the set of dedicated tones to the means 524 for transmitting tones via the at least one radio bearer.

The means 524 for transmitting is configured to provide the means 526 for establishing at least one radio bearer with tones to be transmitted via the at least one radio bearer to the receiver. The tones comprise tones bearing information to be transmitted as well as dedicated tones used for PAPR reduction. The means 524 for transmitting is configured to reduce a peak to average power ratio by using the set of dedicated tones. Therefore the means 524 for transmitting may comprise means (not shown in the figures) for individually processing and modulating the dedicated tones.

The means 526 for establishing at least one radio bearer may be configured to establish two or more radio bearers. Tones can be transmitted from the terminal via the at least one radio bearer to the receiver. The at least one radio bearer may be a SC-FDMA, an OFDM or a mixture of a SC-FDMA and an OFDM based uplink.

Further, the terminal may be configured to support continuous packet connectivity and may comprise means for informing the network about its capability of achieving the PAPR by tone reservation.

Terminals supporting CPC may receive an own class mark. Thus, the network receives a capability to recognise terminals with this property and to schedule these terminals accordingly. CPC terminals may not only have the capability to establish two radio bearers with independent parallel data streams, they may additionally have the capability of a tone reservation for PAPR reduction.

Tone reservation is using dedicated tones to reduce the PAPR. The dedicated tones containing no information are set in such a manner that the peak to average power ratio of the overall transmission is reduced. This allows reducing the back off in the amplifier of the receiver.

According to the invention, the network indicates the option to use tone reservation, and further signals which tones are reserved for the tone reservation. Tone reservation may reduce the spectral efficiency due to the fact that tones bearing no information occupy some part of the spectrum. However, in the uplink all terminals may use the same or an overlapping set of reserved tones, because in the individual terminal the peak power is reduced by individual modulation of the reserved tones.

If all terminals are using the reserved tones only a minimum spectrum is spoiled by these signals. However the other cell interference on those reserved tones may be high.

Therefore according to a further embodiment a set of overlapping tones is used. Which tones are used by a specific user equipment terminal for PAPR reduction can be determined by signalling or even implicitly e.g. by an user equipment ID and can be changed from time to time, again based on explicit signalling or implicitly by using a connection frame number (CFN).

At the base station receiver, there is no need to decode these signals. Due to the fact that the network defines the allocation of the dedicated tones, the network can set the receiver filters in the radio base station (BTS) in such a way that the reserved tones are suppressed.

System concepts with SC-FDMA, OFDM based uplink or a mixture of those, face the challenge of multiple radio bearer support to allow for bandwidth allocations with time constraints omitting MAC based solutions. The network shall be able to read mobile telephone/station (MS) capabilities, and to signal to the terminals in a cell the allocation of reserved tones.

All terminals are using the reserved tones to do an individual processing and modulation of the reserved tones. The modulation contains no user data, i.e. no information bits. The only purpose of the modulation is to reduce the PAPR of an individual terminal. All terminals with the capability to use tone reservations, are using the same tones within a cell. Thus, the impact on spectral efficiency is reduced. A user equipment terminal does not necessarily have to use all tones at every time instance. The base station receiver discards the reception of the reserved tones, because they are only a compound of signals to suppress peaks in the modulation, but not bearing any usable data.

According to a further embodiment of the described organisation method a set of overlapping tones is used. Which tones are used by a specific user equipment for PAPR reduction may be determined by signalling, implicitly e.g. by the user equipment ID or combinations of both and can be changed also from time to time again based on explicit signalling, implicitly by using the CFN (connection frame number) or combinations of both. Using a set of overlapping tones shows a specific good effect in LTE in multi radio bearer uplink configurations. But the concept of sharing the tone allocations for a multitude of terminals can be applied in systems with an OFDMA uplink concept, and in similar manner improves the spectral use, and helps in PAPR reduction, whereas the perceived effect of PAPR reduction may not be as significant as in SC-FDMA systems.

## Claims

1. An apparatus for organising terminals of a communication network, wherein the terminals are configured to transmit tones and to achieve a peak to average power ratio reduction by tone reservation, comprising:
- means (412) for determining a set of dedicated tones, usable by the terminals to achieve the peak to average power ratio reduction,
- means (414) for transmitting an allocation information to the terminals, wherein the allocation information is usable by the terminals to reserve the set of dedicated tones for the peak to average power ratio reduction.

2. The apparatus according to claim 1, wherein the means (414) for transmitting is configured to transmit the allocation information based on explicit signalling.

3. The apparatus according to one of claims 1 or 2, wherein the means (414) for transmitting is configured to transmit the allocation information implicitly by using terminal identifications or connection frame numbers.

4. The apparatus according to one of the previous claims, wherein the means (412) for determining is configured to determine a further set of dedicated tones and wherein the means (414) for transmitting is configured to transmit, a predefined time after transmitting the allocation information, a further allocation information to the terminals, wherein the further allocation information is usable by the terminals to reserve the further set of dedicated tones for the peak to average power ratio reduction.

5. The apparatus according to one of the previous claims, wherein the means (412) for determining is configured to determine a first set of dedicated tones and a second set of dedicated tones and wherein the means (414) for transmitting is configured to transmit a first allocation information to a first terminal, wherein the first allocation information is usable by the first terminal to reserve the first set of dedicated tones for the peak to average power ratio reduction and to transmit a second allocation information to a second terminal, wherein the second allocation information is usable by the second terminal to reserve the second set of dedicated tones for the peak to average power ratio reduction.

6. The apparatus according to claim 5, wherein the first and second set of dedicated tones have at least one dedicated tone in common.

7. The apparatus according to claim 5, wherein the first and second set of dedicated tones have at least half of their dedicated tones in common.

8. The apparatus according to one of the previous claims, further comprising means (416) for recognising terminals being configured to achieve a peak to average power ratio reduction by tone reservation and wherein the means (414) for transmitting is configured to transmit the allocation information to the terminals being configured to achieve a peak to average power ratio reduction by tone reservation.

9. The apparatus according to one of the previous claims, further comprising means (418) for suppressing tones of the set of dedicated tones received by a receiver for receiving tones from the terminals.

10. The apparatus according to claim 9 wherein the means (418) for suppressing is configured to set a filter of the receiver such that the tones belonging to the set of dedicated tones are suppressed.

11. The apparatus according to one of the previous claims, being arranged within a base station of the communication network.

12. A method for organising terminals of a communication network, wherein the terminals are configured to transmit tones and to achieve a peak to average power ratio reduction by tone reservation, comprising:
- determining a set of dedicated tones, usable by the terminals to achieve the peak to average power ratio reduction,
- transmitting an allocation information to the terminals, wherein the allocation information is usable by the terminals to reserve the set of dedicated tones for the peak to average power ratio reduction.

13. A terminal for a communication network, comprising:
- means (526) for establishing at least one radio bearer for transmitting tones,
- means (522) for reserving a set of dedicated tones responsive to an allocation information, wherein the allocation information defines which tones are allocated to the set of dedicated tones,
- means (524) for transmitting tones via the at least one radio bearer, wherein the means for transmitting is configured to reduce a peak to average power ratio by using the set of dedicated tones.

14. The terminal according to claim 13, wherein the means (522) for reserving is configured to receive the allocation information from the communication network.

15. The terminal according to one of claims 13 or 14, wherein the means (526) for establishing is configured to establish two radio bearers.

16. The terminal according to one of claims 13 to 15, comprising means for individually processing and modulating the dedicated tones.

17. The terminal according to one of claims 13 to 16, wherein it is configured to support continuous packet connectivity and comprises means for informing the network about its capability of achieving the peak to average power ratio reduction by tone reservation.

18. The terminal according to one of claims 13 to 17, wherein the dedicated tones bear no information to be transmitted by the terminal.

19. The terminal according to one of claims 13 to 18, wherein the at least one radio bearer is a SC-FDMA, an OFDM or a mixture of a SC-FDMA and an OFDM based uplink.

20. The terminal according to one of claims 13 to 19, wherein it is a mobile device being configured to communicate with a base station of the communication network via the at least one radio bearer.

21. A method for operating a terminal for a communication network according to any of the claims 13 to 20, comprising:
- establishing at least one radio bearer,
- reserving a set of dedicated tones responsive to an allocation information, wherein the allocation information defines which tones are allocated to the set of dedicated tones,
- transmitting tones via the at least one radio bearer, wherein a peak to average power ratio is reduced by using the set of dedicated tones.

22. A communication network, comprising:
- at least two terminals (320, 330) according to one of claims 12 to 18,
- a receiver (310) for receiving tones from the at least two terminals,
- an apparatus according to one of claims 1 to 10.
